(19) Europäisches Patentamt

European Patent Office

Office européen des brevets

(11) **EP 0 898 175 A1**

(12) **EUROPEAN PATENT APPLICATION**

(43) Date of publication:
24.02.1999 Bulletin 1999/08

(51) Int. Cl.[6]: **G01S 7/52**

(21) Application number: 97114415.9

(22) Date of filing: 21.08.1997

(84) Designated Contracting States:
AT BE CH DE DK ES FI FR GB GR IE IT LI LU MC NL PT SE
Designated Extension States:
AL LT LV RO SI

(71) Applicant: **IMRA EUROPE S.A.**
06904 Sophia Antipolis Cedex (FR)

(72) Inventors:
• Bonnefoy, Pierre
06800 Cagnes sur mer (FR)
• Harroy, Franck
06600 Antibes (FR)

(74) Representative:
Kügele, Bernhard et al
NOVAPAT INTERNATIONAL SA,
9, Rue du Valais
1202 Genève (CH)

(54) **Multilobe ultrasonic scanning method**

(57) This invention relates to a method for electronically controlling an ultrasonic transducers phased array to scan an observation area, the ultrasonic transducers being usable as emitters or receivers and being arranged such that at least two lobe-shaped ultrasonic beams are generated in the observation area when they are exited by an electronic scanning signal.

It comprises the step of emitting at least two lobes (8,9,9',10,10') of essentially similar amplitude from the phased array of ultrasonic transducers, progressively changing the direction of said lobes, whereby the relative angular distance $(2.\Delta\theta_o)$ between said lobes stays constant upon said change of direction, in order to scan a range of angles $(\theta)$, and by controlling said range of angles $(\theta)$ so as to scan with each lobe a different sector (S1,S2,S3) of said observation area corresponding to the size of the angular distance $(2.\Delta\theta_o)$ between two lobes.

FIG.7

EP 0 898 175 A1

## Description

*[Technical field of the invention]*

This invention relates to a method for electronically controlling an ultrasonic transducer phased array to scan an observation area, the ultrasonic transducers being usable as emitters or receivers and being arranged such that at least two ultrasonic beams are generated in the observation area when they are exited by the appropriate electronic scanning signal.

This invention also relates to an ultrasonic scanning apparatus implementing such a method.

*[Background art and technical problems related to background art]*

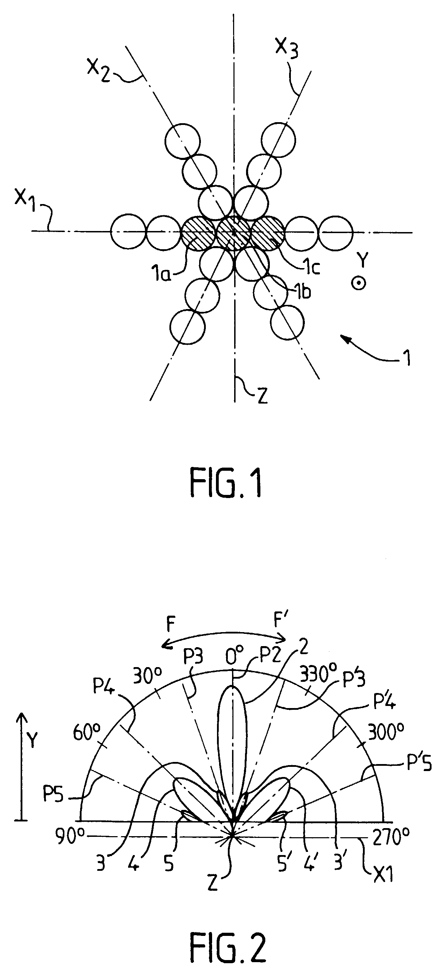

The use of ultrasonic transducer arrays in robotics for scanning an environmental area is well known in the art. More specifically, one example of an interesting ultrasonic transducer array, consists in ultrasonic transducers arranged in lines X1, X2 and X3, as illustrated in fig. 1 in which the ultrasonic transducers are arranged in a six branch-star array 1, and they are all emitting in the same direction Y. In Fig. 1, three transducers which are arranged in a line, i.e. transducers 1a, 1b and 1c, forming a one-dimensional array (or a linear array), are used as ultrasonic wave emitters, and some transducers of the periphery are used as receivers to pick up the returned echo. The ultrasonic transducers generally are circular and spaced by a distance essentially corresponding to the wavelength $\lambda$ of the emitted ultrasonic waves, to create spatial aliasing and grating lobes. A $\lambda/2$ spacing is preferably used, as the spacing between the joint ultrasonic transducers, as well as their power, are depending on their sizes. In such an array, the acoustic field of the transmitter array is given by superposing vibrations from the three emitters electronically exited with different phases, and generates the resulting wave of fig. 2 in the plane (X1,Y) of Fig.1, which is representing the spatial acoustic energy distribution of the excited array : a main focused energy beam 2 which is called 〈〈 main lobe 〉〉, secondary beams 4,4' due to the spectrum aliasing, which are called 〈〈 aliasing lobes 〉〉 or 〈〈 grating lobes 〉〉, and secondary beams 3,3' and 5,5' due to the diffraction at array aperture which are called 〈〈 side lobes 〉〉.

In Fig.2, main lobe 2 defines the shooting plane P2, the aliasing lobes 4 and 4' define the shooting planes P4 and P'4, and the side lobes 3, 3', 5 and 5' define the shooting planes P3, P'3, P5 and P'5. The shooting planes of the aliasing lobes and sides lobes are all symmetrical about the shooting plane P2, and they cut each other along axis Z.

The grating lobes may have high amplitudes which can create interference echoes. By modifying the geometry of the emitter array, it is possible to control these grating lobes.

In a linear transducer array, the directivity of the different lobes depends on the number of transducers and the frequency (wavelength), and the radius of the transducers (angular width) and appodisation (weighting) of the excitation signals supplied to the transducers. The angular distance between the lobes depends on the distance between the transducers.

In order to illustrate these statements, Figure 2 shows a lobe pattern generated by the three emitters 1a, 1b and 1c, of the transducer array of Fig. 1. In this figure, the 〈〈 shooting 〉〉 plane P2 of main lobe 2 is perpendicular to axis X1, and the aliasing and side lobes 4,4', 3,3' and 5,5' are symmetrical about main lobe 2, as the emitter array is symmetrical and the three emitters are emitting with the same phase. However, by varying the phase of the excitation signals supplied to each emitter 1a, 1b and 1c of axis X1 by an electronic scanning, it is possible to focus and point the main lobe in different angles in the plane (X1,Y). In this case, the shooting plane P2 of main lobe 2, the shooting planes P4,P'4 of aliasing lobes, and the shooting planes P3,P'3 and P5,P'5 of the side lobes, whereby these secondary shooting planes are symmetrical about the shooting plane P2, are arranged around axis Z, as illustrated by arrows F and F' in fig. 2. The phase differences of the excitation signals supplied to each emitter 1a, 1b and 1c, and they are set so as to direct the phases to the acoustical pulses in a desired direction, must correspond to the differences of the propagation paths of the ultrasonic waves from individual emitters so as to yield a maximum of the field energy which propagates in the desired direction.

Simultaneously, the spatial energy distribution of the lobes vary, i.e. those secondary lobes which are situated on the one side of the main lobe to which the main lobe turns due to the scanning (arrows F or F') decrease, and the ones situated on the opposite side increase. Main lobe becomes an aliasing lobe, and the aliasing lobe of the opposite side becomes main lobe. By successive shots, in which successive phase variations between the excitation signals supplied to the emitters are introduced, a scanning of the observation area from 0° to +/-90° can be achieved. By identifying absence of a high echo or presence of a high echo, during the measuring of the echo of the main lobe, the location, configuration and distribution of objects in the scanned area is recognized. Such a one-dimensional ultrasonic transducer phased array is described in Japanese patent JP 052357.

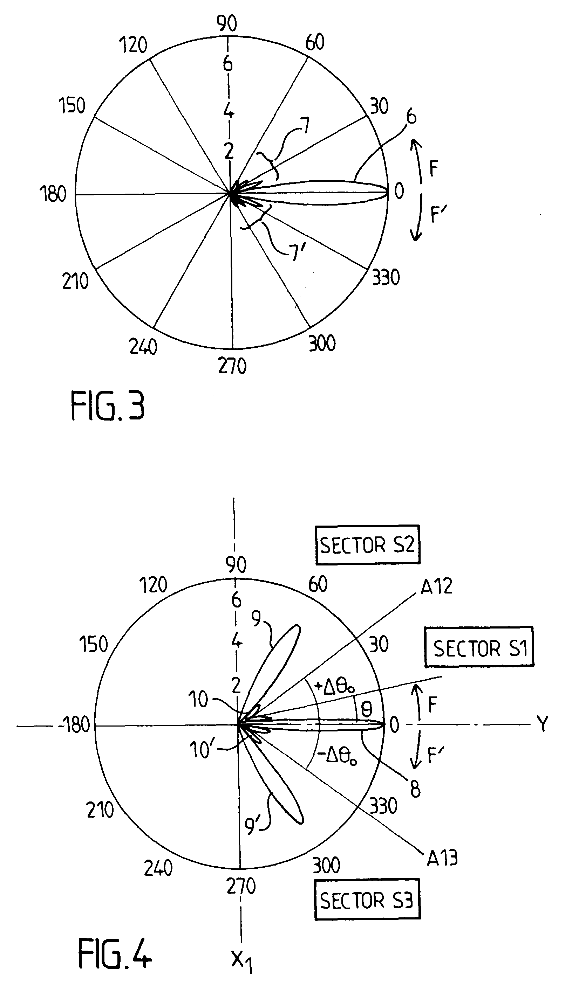

For the above stated reasons, the known methods are focusing on increasing the main lobe, and decreasing or eliminating the aliasing lobes and side lobes, in order to avoid any interference echoes of these secondary lobes. As an example of a scanning lobe pattern, the lobe pattern of the type of Fig. 3 is commonly used for scanning. This lobe pattern is provided with one single main lobe 6 and several very small side lobes 7,7', but without any aliasing lobes. Such a lobe pattern may be obtained by electronically controlling the seven X1-aligned transducers of the transducer array of Fig. 1, which are $\lambda/2$ spaced. In this case, there is no spectrum aliasing, i.e. no aliasing lobes, due to Shannon's rule.

An example of a two-dimensional transducer array together with its electronic scanning method is described in 《 Ultrasonic imaging system for robots using an electronic scanning method 》 , S. Kuroda et al, Robotica (1984), volume 2, pages 47 to 53.

In both type of transducer arrays, one or two-dimensional, such a point-by-point scanning requires a high number of shots. The sound speed in the air being low, the time for scanning the whole area and analyzing the returned echo is long and is not well adapted to robotics applications.

Therefore, there is an important need to develop a new type of ultrasonic scanning method which is less time-consuming than the above mentioned method, and which can be easily implemented by simple ultrasonic transducer arrays and electronic control circuits.

The main object of the present invention is to propose a method for electronically controlling an ultrasonic transducer array of a known type, which allows to more rapidly scan a wide angle than compared with the above mentioned method. For this purpose, the invention takes advantage of the presence of secondary lobes, contrary to the known scanning methods in which they are considered as interference. Such lobes, when kept outside of the defined angular sectors of scanning the main lobe, do not interfere anymore.

*[Summary of the invention]*

This object is achieved by a method for electronically controlling an ultrasonic transducer array of the type as described above, which is characterized by emitting at least two lobes (i.e. two ultrasonic beams) of essentially similar amplitude from the phased array of ultrasonic transducers, progressively changing the direction of said lobes, whereby the relative angular distance between said lobes stays constant upon said change of direction, in order to scan a range of angles, and by controlling said range of angles so as to scan with each lobe a different sector of said observation area corresponding to the size of the angular distance between two lobes.

The method according to the present invention can be further characterized by a correlation step, consisting in comparing the time reception of two identical echo signals by two different transducers of the transducer array used as receivers, and determining the angle and distance of the echo location in accordance with the time delay and the shooting angle.

In a different embodiment, the method according to the invention can be further characterized by a confirmation step consisting in controlling, after detecting a returned echo in a detected direction of the scanning angle range, the transducer array to generate a single focused lobe, in order to successively shot in said detected direction in, at least one of said sector.

In another different embodiment, the method according to the present invention can be further characterized by a beam forming step consisting in adding, after one shot from one emitter, the received echo signals of receivers, each echo signal being shift with a time delay corresponding to a virtual angle, in order to identify the direction and distance of the detected object corresponding to the highest echo addition signal.

The present invention also relates to an ultrasonic scanning apparatus implementing such a method, comprising an ultrasonic transducer phased array controlled by an electronic control circuit, which is characterized in that the ultrasonic transducers are arranged such that a plurality of lobes with essentially the same amplitude are generated.

In particular embodiments, the ultrasonic apparatus according to the present invention can be further characterized in that the electronic control circuit controls the phase of the scanning signal supplied to each transducer used as emitter, in order for each lobe to scan a sector of the observation area corresponding to the angular difference between two lobes.

Such ultrasonic apparatus can be further characterized in that it comprises a means to carry out a correlation step, a confirmation step, and/or a beam forming step.

Advantageously, the ultrasonic transducer array generating the lobe pattern which defines each a sector is a linear array (one-dimensional array), and the one used for the confirmation step is a six branch-star shaped array (two-dimensional array).

In another embodiment of the present invention, the ultrasonic transducer array may be a combination of at least two lines of ultrasonic transducers arranged in staggered rows (two-dimensional array). Further, the different types of configurations of ultrasonic transducer array may be arranged on a curved surface.

Additional objects and features of the invention will appear from the following description in which the preferred embodiments are set forth in detail in connection with the accompanying drawings.

. figure 1 (already described) shows a known ultrasonic transducer array used for scanning an observation area,

. figure 2 (already described) shows the ultrasonic beam diagram obtained by controlling three aligned transducers of the ultrasonic transducer array of figure 1, as emitters,

. figure 3 (already described) shows an ultrasonic beam diagram commonly used in prior art scanning methods,

. figure 4 shows an ultrasonic beam diagram obtained by an ultrasonic scanning apparatus according to a first embodiment of the present invention,

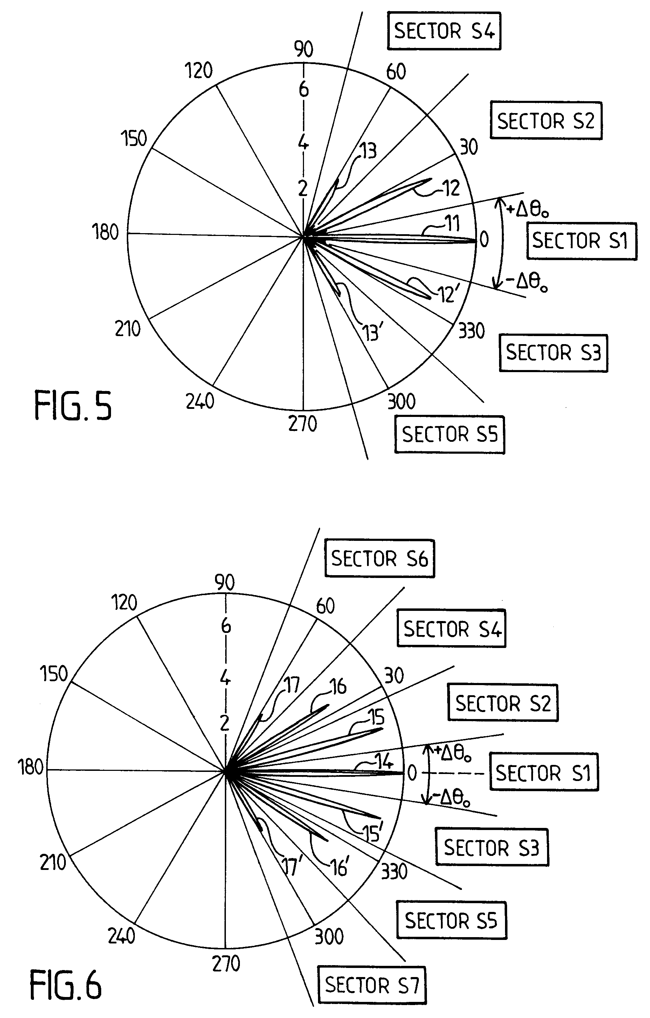

. figure 5 shows an ultrasonic beam diagram obtained by an ultrasonic scanning apparatus according to a second embodiment of the present invention,

. figure 6 shows an ultrasonic beam diagram obtained by an ultrasonic scanning apparatus according to a third embodiment of the present invention.

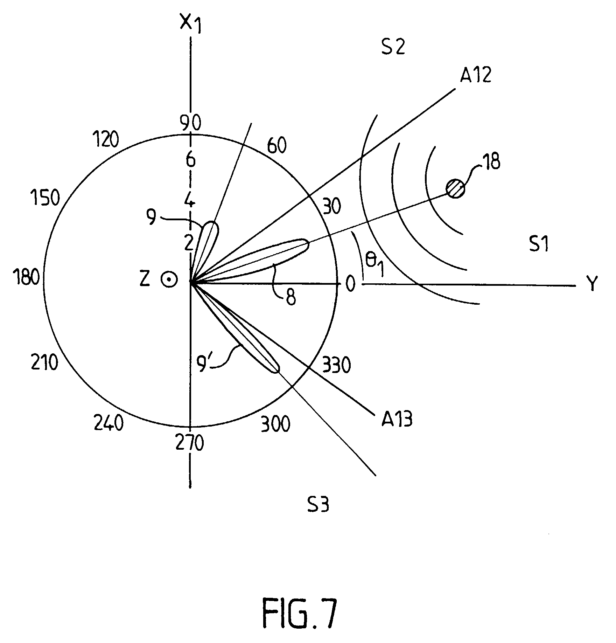

. figure 7 shows an example of the ultrasonic lobe pattern of Fig. 4 scanning the observation area and detecting an object in a particular angle,

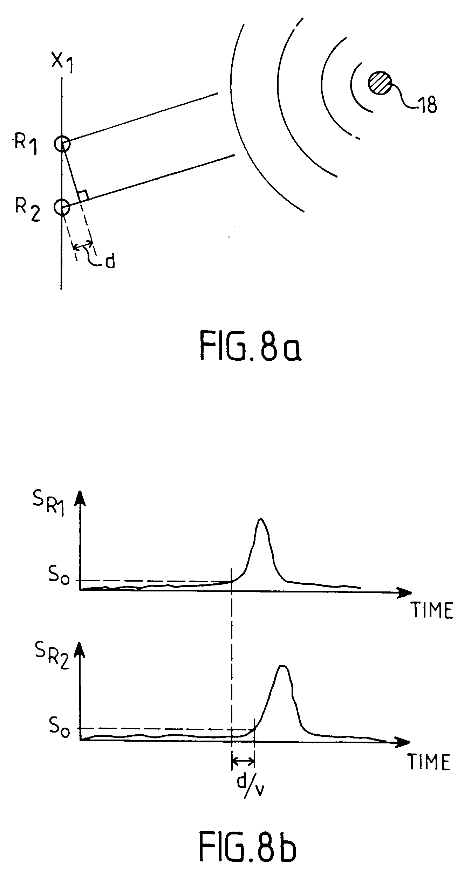

. figures 8a and 8b show the correlation step applied to the ultrasonic echoes of the detected object of Fig. 7,

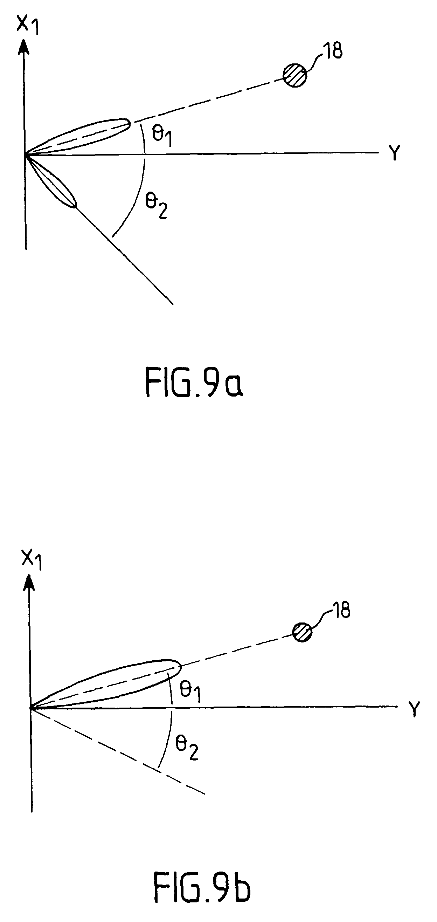

. figures 9a and 9b show the confirmation shot step applied to the ultrasonic echoes of the detected object of Fig.7, and

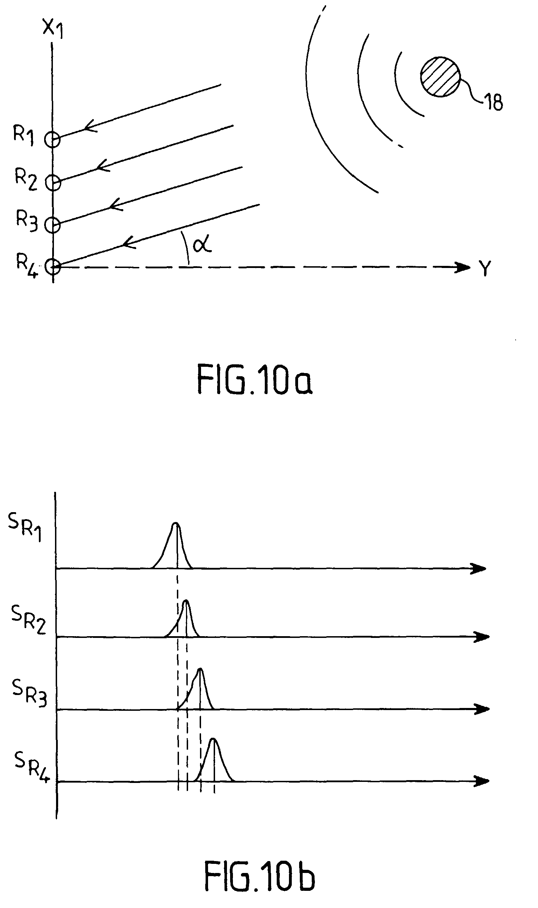

. figures 10a and 10b show the beam forming step applied to the ultrasonic echoes of the detected object of Fig. 7.

*[Embodiments of the present invention]*

Figure 4 shows the different ultrasonic beams obtained by an ultrasonic transducer array controlled by an electronic scanning circuit according to an embodiment of the present invention. The ultrasonic transducers are sized to generate a main lobe 8 and two aliasing ultrasonic lobes 9 and 9' which have an amplitude almost equal to the one of the main lobe. Small side lobes 10 and 10' are of course generated, but they are insignificant. By taking Y, the symmetrical axis of the main lobe 8, as the reference axis when each emitter aligned along axis X1 is exited with a signal having the same phase, the two secondary lobes 9 and 9' are located at 30° and 330°.

To get such an ultrasonic diagram to be used of the type described above, the scanning signal frequency used is, for instance, f= 40 kHz, the number of transducers N is 4, the transducer radius is 4,5 mm, the distance between two transducers is d= 1,7 mm, and the angular width of each beam is about ±8° (at 3 dB).

The observation area can be divided in three equal angular sectors S1, S2 and S3, each sector corresponding to a lobe. Each angular sector is delimited by two adjacent axes A12 and A13 which are median axes between the main lobe 8 and the two adjacent secondary lobes 9 and 9'. In this particular embodiment, each sector is defined with an angular value of $2.\Delta\theta_o = 60°$.

According to the invention, the electronic control circuit supplies each emitter with an out of phase signal in order to make a $\pm\Delta\theta = \pm30°$ scanning, i.e. each of the three lobes scans its own sector of $\pm30°$ at the same time. In this particular embodiment, the scanning time of an area of 180° can be reduced by 3 with respect to the known scanning methods based on the main lobe.

The present invention is not limited to three sectors to be scanned by three lobes, but can be carried out by at least 2 lobes, 4, 5, 7 or more lobes, defining the same number of scanning sectors, as described below.

Fig. 5 shows another embodiment of a lobe pattern of one main lobe 11 and four symmetrical aliasing lobes 12,12' and 13,13', defining five sectors S1, S2, S3, S4 and S5 of about 30°. This type of lobe pattern may be generated by a linear array of seven ultrasonic transducers which are used as emitters and which are 2,5.λ spaced from each other. According to the present invention, these ultrasonic transducers are electronically controlled so as to get each one of the five lobes 11, 12, 12', 13 and 13' scanning one sector (S1, S 2, S3, S4 and S5 respectively) in a scanning angular range of about ±Δ15°.

Fig. 6 shows a third embodiment of the present invention, consisting in generating seven lobes, i.e. one main lobe 14 and six aliasing lobes 15,15', 16,16' and 17,17', so as to scan seven corresponding sectors S1, S2, S3, S4, S5, S6 and S7. Such a lobe pattern may be generated by a linear array of seven ultrasonic transducers which are 3,75.λ spaced.

Fig. 7 shows the detection of an object 18 by the lobe pattern of Fig.4 in a particular scanning angle θ1 in sector S1 by main lobe 8. However, since one shot is made in each sector S1, S2 and S3 at the same time, a returned echo can correspond to the same angle in different sectors (i.e. in response to one of the three ultrasonic lobes 8, 9 and 9'), and it is necessary to apply a particular analysis process to identify the source sector in which the detected object is located.

The returned echo can be electronically processed by a correlation step (or a time flight difference), in order to separate the ultrasonic echoes in response to the scanning of each lobe in its corresponding sector. As shown in Fig.8a, at least two transducers of the ultrasonic transducer array used to implement this electronic scanning method, are used as receivers R1 and R2, preferably located at the periphery of the emitter line along axis X1. The delay $\Delta t_{R1,R2}$ between the receptions of the same echo in the two different receivers R1 and R2 gives the direction (angle) and distance of the object detected in the observation area without any ambiguity. This delay $\Delta t_{R1,R2}$ is given by *d/v, d* is distance covered by the return echo between the reception times of receivers R1 and R2, and $v$ is the propagation velocity. For the calculation of $d/v$, the time difference can be measured directly by interpolating the peak slops or by using a threshold $S_0$ as sown in Fig.8b, in which are represented the echo envelope amplitude $S_{R1}$ and $S_{R2}$ with respect to time.

Another possibility is to apply a confirmation shot. This step is illustrated by Fig.9a and 9b in considering two lobes L1 and L2. As shown in Fig. 9a, the return echo of object 18 which is in a direction $\theta1$ (-30° ≤ $\theta1$ ≤ +30°), is detected as being at angle $\theta1$ or $\theta2$, corresponding to two lobes L1 and L2, respectively. The confirmation step consists in a second single shot of a single lobe L'1 or L'2 in the angular direction $\theta1$ or $\theta2$, so as to identify the actual angular direction of the object in accordance with the return echo. One example of an ultrasonic transducer array generating such a single focused energy beam in the shooting plane (the aliasing lobes being in other directions), may be the six branch-star array of Fig.1 in which all transducers are used as emitters in order to get small secondary lobes.

A further alternative echo processing step is the beam forming step. The same phase correlation made for emitting purposes, is made in this alternative step for echo reception. As shown in Fig.10a, from one shot of a single emitter, the echo reception signals of target 18 arrive at different time in the various transducers used as receivers, e.g. four receivers R1, R2, R3 and R4 . Fig.10b shows the value of the dephased return echo signal amplitude $S_{R1}$, $S_{R2}$, $S_{R3}$ and $S_{R4}$ for each receiver, with respect to time. The beam forming method consists in making, for each angle, a dephased summation of the memorized return echo signals, so as to obtain the value of the return echo for each angle. For each shot, angular openings $\theta_i$ which are corresponding each to a time delay $\Delta_i$, are electronically created for different virtual angles, creating a reception directivity, and the scanning is achieved by calculation for each angle $\theta_i$:

$$A(\theta_i) = S_{R1}(t) + S_{R2}(t+\Delta_i) + S_{R3}(t+2\Delta_i) + S_{R4}(t+3\Delta_i),$$

and, by checking the maximum of the amplitude for different angle $\theta_i$, the target angle $\alpha$ can be found. The addition of these individual time delays produces an unambiguous indication of the absolute angle under which the reflecting obstacle is seen from the receivers. This beam forming step may be used after one shot or after a possible position confirmation shot.

The particular ultrasonic transducer configurations which are described above (i.e. line and star configurations) are taken as examples of one-dimensional and two-dimensional configurations. However, the two-dimensional configuration may be a combination of, at least, two lines of ultrasonic transducers which may advantageously be arranged in staggered rows (quincunx). Preferably, the configurations of transducers may comprise an odd number of ultrasonic transducers used as emitters, and the transducers used as receivers may be the ones arranged at each end of said lines or branches. Further, both one-dimensional and two-dimensional configurations of ultrasonic transducers may be arranged on a curve surface so as to get a three-dimensional configuration.

*[Industrial application]*

Such an electronic phased array scanning can be used in a solid medium, in a gaseous medium, as air, or in a liquid medium, as water. The scanning time of a whole observation area, as well as the echo analysis time, can be highly reduced. Depending on the required resolution and separation capability of the ultrasonic transducer array, the scanning time can be reduced by 2, 3 or more.

In the present invention only a few ultrasonic transducers may be used for scanning, and they are easily available on the market. Such an apparatus has low cost and a compact size.

The present invention has a large range of applications. For instance, it can be used for vehicles (back sonar system, automatic car parking, collision protection), in industry (automatic parts distribution, automatic packaging, remote control of objects on assembly lines, cleaning robots, etc.), at home (automatic floor cleaning) and for public health (sonar for blind persons, and movement detection for elderly person).

**Claims**

1. Method for electronically controlling an ultrasonic transducer phased array to scan an observation area, the ultrasonic transducers being usable as emitters or receivers and being arranged such that at least two lobe-shaped ultrasonic beams are generated in the observation area when they are exited by the appropriate electronic scanning signal, characterized by emitting at least two lobes (8,9,9',10,10';11,12,12',13,13';14,15,15',16,16',17,17') of essentially similar amplitude from the phased array of ultrasonic transducers, progressively changing the direction of said lobes, whereby the relative angular distance ($2.\Delta\theta_0$) between said lobes stays constant upon said change of direction, in order to scan a range of angles ($\theta$), and by controlling said range of angles ($\theta$) so as to scan with each lobe a different sector (S1-S5) of said observation area corresponding to the size of the angular distance ($2.\Delta\theta_0$) between two lobes.

2. Method according to claim 1, characterized in that it further comprises a correlation step consisting in comparing the time reception of two identical echo signals by two different transducers of the transducer array used as receivers, and determining the angle ($\theta$1) and distance of the echo location in accordance with the time delay and the shooting angle.

3. Method according to claim 1, characterized in that it further comprises a confirmation step consisting in controlling, after detecting a returned echo in a detected direction ($\theta$1) of the scanning angle range, the transducer array to generate a single focused energy beam (11,L2), in order to successively shoot in said detected direction ($\theta$1,$\theta$2) in, at least one of said sector (S1-S5).

4. Method according to claim 3, characterized in that said single focused energy beam (L'1,L'2) is generated by a six branch-star shaped transducer array (1).

5. Method according to claim 1, characterized in that it comprises further a beam forming step consisting in adding (A($\theta_i$)), after one shot from one emitter, the received echo signals of receivers (R1,R2,R3,R4), each echo signal being shift with a time delay ($\Delta_i$) corresponding to a virtual angle ($\theta_i$), in order to identify the direction ($\alpha$) and distance of the detected object corresponding to the highest echo addition signal (A($\theta_i$)).

6. Ultrasonic scanning apparatus implementing the method for electronically controlling an ultrasonic array according to one of the previous claims, comprising an ultrasonic transducer phased array controlled by an electronic control circuit, characterized in that the ultrasonic transducers are arranged such that a plurality of lobes (8,9,9',10,10';11,12,12',13,13'; 14,15,15',16,16',17,17') with essentially the same amplitude are generated.

7. Ultrasonic scanning apparatus according to claim 6, characterized in that the electronic control circuit controls the phase of the scanning signal supplied to each transducer used as emitter, in order for each lobe to scan a sector (S1-S5) of the observation area corresponding to the angular difference between two lobes.

8. Ultrasonic scanning apparatus according to claim 6 or 7, characterized in that the electronic control circuit comprises a means to carry out a correlation step as described in claim 2.

9. Ultrasonic scanning apparatus according to claim 6 or 7, characterized in that the electronic control circuit comprises a means to carry out a confirmation step as described in claim 3.

10. Ultrasonic scanning apparatus according to claim 6 or 7, characterized in that the electronic control circuit comprises a means to carry out a beam forming step as described in claim 5.

11. Ultrasonic scanning apparatus according to any one of claims 6 to 10, characterized in that the ultrasonic transducer array is a line (X1) of ultrasonic transducers.

12. Ultrasonic scanning apparatus according to any one of claims 6 to 10, characterized in that the ultrasonic transducer array is a star configuration (X1,X2,X3) of ultrasonic transducers.

13. Ultrasonic scanning apparatus according to claim 12, characterized in that the star configuration is a six branch star.

14. Ultrasonic scanning apparatus according to any one of claims 6 to 10, characterized in that the ultrasonic transducer array is a combination of at least two lines of ultrasonic transducers arranged in staggered rows.

15. Ultrasonic scanning apparatus according to any one of claims 6 to 14, characterized in that the ultrasonic transducer array is arranged on a curved surface.

FIG.1

FIG.2

FIG.3

FIG.4

FIG.5

SECTOR S4

SECTOR S2

SECTOR S1

SECTOR S3

SECTOR S5

FIG.6

SECTOR S6

SECTOR S4

SECTOR S2

SECTOR S1

SECTOR S3

SECTOR S5

SECTOR S7

FIG.7

FIG. 8a

FIG. 8b

FIG.9a

FIG.9b

FIG.10a

FIG.10b

| | European Patent Office | EUROPEAN SEARCH REPORT | Application Number EP 97 11 4415 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (Int.Cl.6) |
|---|---|---|---|
| A | EP 0 634 138 A (YOKOGAWA MEDICAL SYSTEMS,LTD.) * abstract; figure 2 * * column 5, line 11 - line 22 * --- | 1 | G01S7/52 |
| A | US 3 541 501 A (MIKINA ET AL.) * column 5, line 62 - line 75; figure 1 * ----- | 1 | |

| | | | TECHNICAL FIELDS SEARCHED (Int.Cl.6) |
|---|---|---|---|
| | | | G01S G10K |

The present search report has been drawn up for all claims

| Place of search | Date of completion of the search | Examiner |
|---|---|---|
| BERLIN | 21 January 1998 | Danielidis, S |